(19) Europäisches Patentamt
European Patent Office
Office européen des brevets

(11) **EP 2 963 793 A1**

(12) **EUROPEAN PATENT APPLICATION**

(43) Date of publication:
**06.01.2016  Bulletin 2016/01**

(51) Int Cl.:
*H02M 1/32* (2007.01)        *H02M 3/335* (2006.01)
*H02M 1/00* (2006.01)

(21) Application number: **14175764.1**

(22) Date of filing: **04.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NXP B.V.**
**5656 AG Eindhoven (NL)**

(72) Inventors:
• **Scholten, Johannes**
  **Redhill, Surrey RH1 1SH (GB)**

• **Daniel, Bobby Jacob**
  **Redhill, Surrey RH1 1SH (GB)**

(74) Representative: **Hardingham, Christopher Mark**
**NXP B.V.**
**Intellectual Property & Licensing**
**Red Central**
**60 High Street**
**Redhill, Surrey RH1 1SH (GB)**

(54) **A SMPC, controller therefor, power supply and a method of controlling a SMPC**

(57)    A controller, configured to operate a switched mode converter, the switched mode converter comprising a power switch operable with a fixed normal switching frequency; the controller comprising a peak current control circuit configured to switch the power switch in dependence on a peak current in a primary side of the switched mode converter; an oscillator configured to derive the fixed normal switching frequency, a peak current run-away detector configured to detect an on-set of a run-away of the peak current, and a frequency adjustor coupled to the oscillator and configured to instruct the oscillator to temporarily reduce the switching frequency in response to detection of on-set of a run-away of the peak current. An associated switched mode converter, power supply, and method for operating such a converter are also disclosed.

*Figure 4*

EP 2 963 793 A1

**Description**

Field

This invention relates to switch mode power converters (SMPCs) to controllers therefor, to power supplies using such converters, and to methods of controlling such converters.

Background

A wide variety of different types of SMPCs are known, and a similarly wide variety of modes of operation of such SMPCs is also known. One mode of operation, which is commonly used, for example with flyback converters, due in part to its relative simplicity, is fixed frequency operation with peak current control.

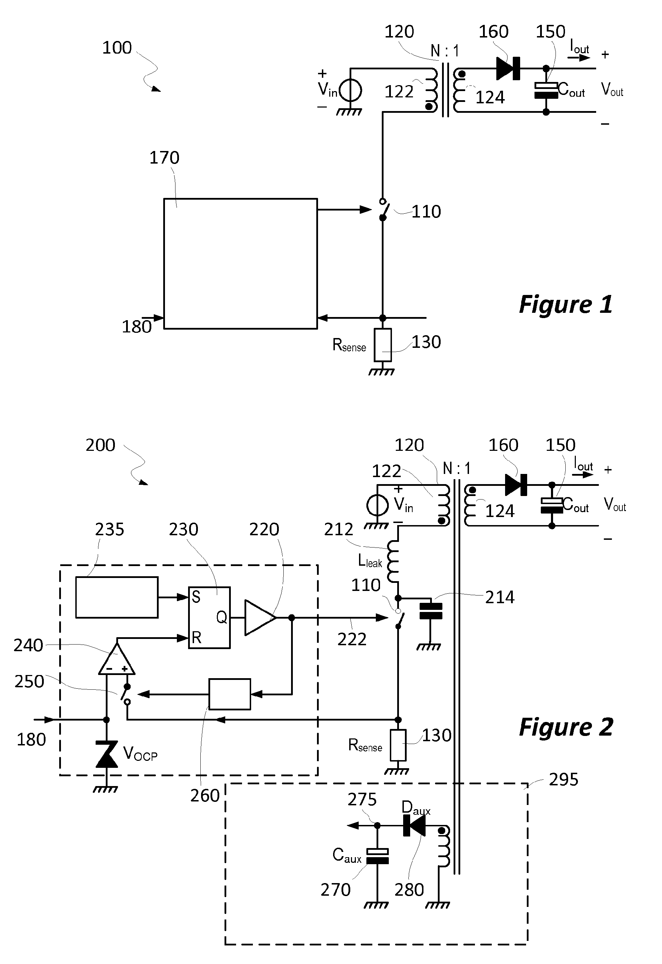

A non-limiting example of a switched mode power converter to which the present disclosure relates is a flyback converter. A generic flyback converter 100 is shown in figure 1. The converter 100 comprises a power switch 110 in series with the primary winding 122 of a transformer 120 having a N:1 turns ratio. In use the primary winding 122 of the transformer is connected to an input voltage Vin, and the switch is grounded via a sense resistor 130 Rsense. The secondary winding 124 on the output side of the transformer 120 is connected to a smoothing capacitor 150 Cout, via a blocking diode 160. The output appears across the smoothing capacitor 150. The flyback converter includes a controller 170, which in this instance may provide fixed frequency with peak current control, the level being provided by a control input 180.

Figure 2 shows such a flyback converter in more detail, in particular with the controller elements being explicitly shown. Alongside the details of figure 1, this figure shows a parasitic inductance Lleak 212 and capacitance Cdrain 214 of the power switch 110. The switch is driven by the drive level 222 from a switch driver 220, the on/off status of which is determined by the output (Q) of a set-reset flip-flop through 230. The set (S) input to the flip-flop is provided by the output from an oscillator 235. The reset (R) input to the flip-flop 230 is provided from a comparator 240 which compares the voltage across the sense resistor Rsense 130 with the control input 180. In this example circuitry is included, depicted generically as a zener diode, to the control input 180 in order to provide an overcurrent protection ($V_{OCP}$). Overcurrent protection may be provided, for instance as shown by limiting the voltage on the control input to a value $V_{OCP}$, as a result of which the current through the primary winding is limited to $V_{OCP}$ x Rsense.

The input to the comparator 240 from the sense resistor 130 may be disabled during the start of an on-period by a switch 250 under the control of a leading-edge blanking (LEB) circuit 260.

Power for the controller is provided by the circuit shown at 295: an auxiliary winding on the primary side which is used to charge an auxiliary capacitor 270 (Caux) through a diode (Daux) 280; the voltage 275 across the capacitor is supplied to the supply input of the flyback. An SMPS controller often has an overvoltage protection (not shown) on its own supply voltage pin: if the transformer saturates, its inductance decreases and as a result the primary current increases even more. Each time the switch 110 is switched off, Lleak and Cdrain start to oscillate. If the primary current increases, the amplitude of this oscillation, also referred to as ringing, also increases. The ringing also appears on the auxiliary winding and is rectified by Daux. If the voltage on 275 becomes too high it can damage the controller or trigger its overvoltage protection.

In operation, under conditions of a short-circuit across the output, an effect known as "peak current runaway" can occur. Peak current runaway may also occur during a start-up phase, when the output capacitor (Cout) 150 is not charged and thus the controller sees a low output voltage, similar to a short-circuit.

Peak current runaway may be accommodated by using ruggedised components; however this results in significant additional expense for the converter. Provision of an overcurrent protection circuit, such as is widely used to switch off the driver after a maximum peak current level has been reached may be effective to limit peak current under conditions with low enough input voltage, to prevent transformer saturation. But at high input voltage and/or shorted output it may not be possible thereby to avoid the peak current runaway effect. Alternatively, during start-up it may be possible to provide a soft start sequence with frequency control such that the switching frequency is gradually increased during a fixed time interval; however this is not readily transferable to providing protection against peak current runaway arising due to short circuit conditions. Some protection may be offered by switching the converter off in the event that it has been running with minimum on time for a certain number of cycles; however, such a solution would need to be disabled during start-up and therefore may be complex and not ideal.

Summary

According to a first aspect of the present disclosure, there is provided a controller configured to operate a switched mode converter, the switched mode converter comprising a power switch operable with a fixed normal switching frequency; the controller comprising a peak current control circuit configured to switch the power switch in dependence on a peak current in a primary side of the switched mode converter; an oscillator configured to derive the fixed normal switching frequency, a peak current run-away detector configured to detect an on-set of a run-away of the peak current, and a frequency adjustor coupled to the oscillator and configured to instruct the oscillator to temporarily reduce the switching frequency in response to detection of on-set of a run-away of the peak current. The fixed normal switching frequency may be derived from the oscillator in a variety of ways; non-limiting examples are as follow: the oscillator may, under normal conditions, oscillate directly with the fixed normal switching frequency; alternatively, the oscillator may oscillate under normal conditions with a higher frequency, the oscillator output being frequency-divided to produce the fixed normal switching frequency; alternatively, the oscillator may oscillate with a lower frequency, the oscillator output being frequency-doubled to produce the fixed normal switching frequency. In other words, the fixed normal switching frequency is related to, or derived from, the normal frequency of oscillation of the oscillator.

Thus, according to this aspect, the controller may, by means of only a few additional components, detect the potential on-set of peak-current runaway, and modify the operation of the converter to prevent such runaway from saturating the transformer coil. The controller temporarily reduces the operating frequency of the power switch, after which the frequency returns to the normal operating frequency: full frequency control, such as is associated with relatively complex, and thus expensive, controllers, thus may not be required.

In one or more embodiments, the peak current run-away detector comprises: an on-time minimum detector, configured to detect that the on-time of the power switch does not exceed a threshold on-time; and a high power demand detector, configured to detect a power demand which exceeds a threshold power.

In one or more embodiments, the controller comprises a leading edge blanking circuit for providing a leading edge blanking period and configured to prevent the power-switch from opening, in operation, before a minimum on-time has elapsed, and a leading edge blanking stretcher circuit, wherein the on-time minimum detector is configured to detect an on/off status of the power switch at the end of a stretched leading edge blanking period.

In one or more other embodiments, the controller comprises a leading edge blanking circuit for providing a leading edge blanking period and configured to prevent the power-switch from opening, in operation, before a minimum on-time has elapsed, and a leading edge blanking stretcher circuit, wherein the on-time minimum detector is configured to detect an opening of the power switch during a stretched leading edge blanking period.

In one or more embodiments, the frequency adjustor is configured to reduce the switching frequency by a predetermined amount for a single switching cycle.

One or more embodiments may further comprise a counter, wherein the frequency adjustor is configured to reduce the frequency by skipping a number of switching cycles determined by a status of the counter. Such a counter may be configured to increment by one in response to the peak current run-away detector detecting an on-set of a run-away of the peak current, on a switching cycle immediately following the skipped switching cycles. Alternatively or in addition, such a counter may be configured to decrement by one in response to the peak current run-away detector detecting an absence of an on-set of a run-away of the peak current on the switching cycle immediately following the skipped switching cycles.

According to another aspect of the present disclosure, there is provided a switched mode converter comprising a controller as described above, a power switch and a transformer. The switched mode converter may be a flyback converter. Flyback converters are generally inexpensive relative to other types of converter, and are relatively simple to operate. According to yet another aspect of the present disclosure, there is provided a power supply comprising such a switched mode converter.

According to further aspect of the present disclosure, there is provided a method of controlling a switched mode converter, the switched mode converter comprising a power switch operable with a fixed normal switching frequency; the method comprising switching the power switch in dependence on a peak current in a primary side of the switched mode converter, operating an oscillator to derive the fixed normal switching frequency, detecting an on-set of a run-away of the peak current, and instructing the oscillator to temporarily reduce the switching frequency in response to detection of on-set of a run-away of the peak current.

One or more embodiments comprise detecting an on-set of a run-away of the peak current comprises: detecting that the on-time of the power switch does not exceed a threshold on-time; and detecting a power demand which exceeds a threshold power.

In one or more embodiments, the controller comprises a leading edge blanking circuit for providing a leading edge blanking period and configured to prevent the power-switch from opening, in operation, before a minimum on-time has elapsed. The method may further comprise determining a stretched leading edge blanking period, and detecting an on/off status of the power switch at the end of the stretched leading edge blanking period. Alternatively and without limitation, the method may comprise determining a stretched leading edge blanking period, and detecting an opening of the power switch during the stretched leading edge blanking period.

These and other aspects of the invention will be apparent from, and elucidated with reference to, the embodiments described hereinafter.

Brief description of Drawings

Embodiments will be described, by way of example only, with reference to the drawings, in which

figure 1 illustrates a flyback converter with fixed frequency, peak current control;
figure 2 illustrates the flyback converter according to figure 1, showing the controller in more detail;
figure 3 illustrates peak-current run-away;

figure 4 shows a switched mode converter and controller according to embodiments;
figure 5 shows various waveforms associated with a controller as shown in figure 4, and
figure 6 shows the primary and secondary current for a flyback controller in operation according to embodiments.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments

Detailed description of embodiments

In order to better understand aspects of the present disclosure, the phenomenon of peak current runaway will first be considered in more detail.
If the output is shorted (i.e. output voltage Vout is very low), the duty cycle δ becomes very low, especially at high input voltage Vin:

$$\delta = \frac{N.V_{out}}{V_{in} + N.V_{out}}$$

During the short primary stroke (that is to say, the on-time of the switch), the current rapidly increases due to a high input voltage:

$$dI/dt = Vin/Lprim,$$

where Lprim is the inductance of the primary coil of the transformer.
But during the long secondary stroke (the off-time of the switch), the current barely decreases due to the low output voltage:

$$dI/dt = -Vout/Lsec$$

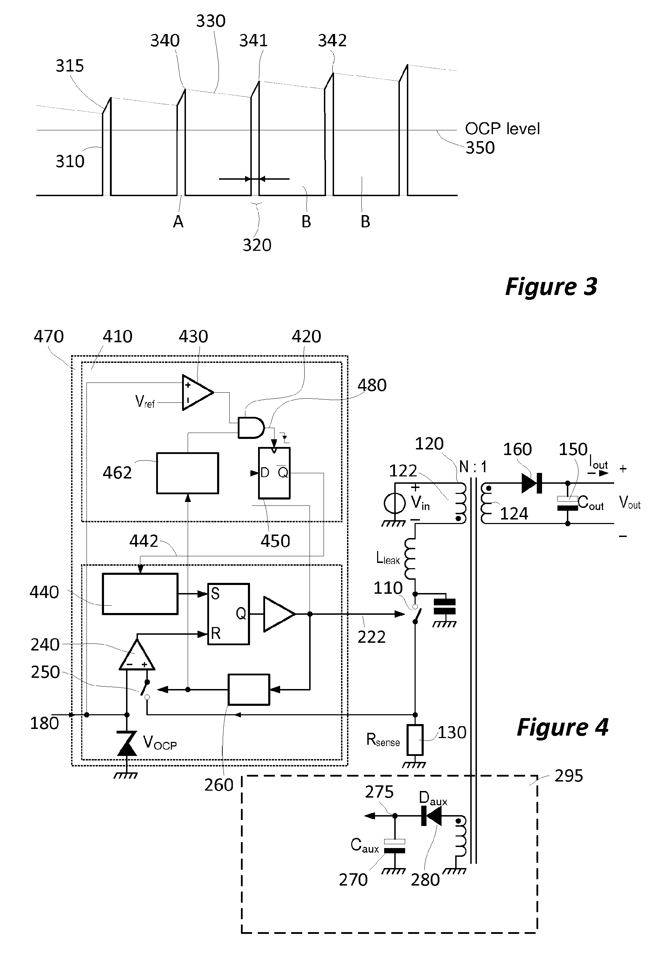

where Lsec is the inductance of the secondary coil of the transformer.
Even in the presence of an overcurrent protection circuit, as shown in figure 2, the disparity between the slopes of the current rise time and current fall time may result in that, even at minimum on-time, the current can run-away. This is depicted in figure 3 which shows the primary current 310. The current is nonzero only during the short on-time periods 'A' which may typically be the minimum possible on-time 320. During this short on-time period the current rapidly increases as shown at 315, before falling to 0 as the power switch opens. The figure also shows the secondary current 330 during the longer, off-time periods 'B'. As shown, the current barely decreases during this period, and so when the current commutates to the primary winding once the switch is closed at the beginning of the next cycle, the current has not fallen back to the level it was at the start of the previous cycle; cycle by cycle there is then a gradual increase in the current - that is to say there is a peak current runaway in that consecutive peaks 340, 341, 342 are at an increasingly higher level. This runaway effect may occur despite the fact that the primary current is higher than a nominal overcurrent protection level 350: it will be noted that an overcurrent protection circuit which opens the power switch as soon as an overcurrent condition is detected, is not effective to avoid this effect, since in practice it is not possible to reduce the on-time below a certain minimum on-time.
There are at least three reasons why in general it is not possible to reduce the on-time below a certain minimum on time. Firstly: switch-off delay - after switching off the driver signal it still takes some time to switch off the switch (which is typically a MOSFET or bipolar transistor). Secondly: propagation delay - sense signals take time to propagate, so there will always be some delay between detecting that the peak current has passed the target level and actually switching off the driver signal. And thirdly: leading edge blanking - in the first part of each new cycle, the peak current sense signal is intentionally blanked to prevent false triggering on the discharge spike caused by parasitic capacitances (discharge of drain-source capacitance, capacitance of the primary transformer winding, and any deliberately added capacitance, which are, in combination, represented by Cdrain 214 in figure 2).
According to one aspect of the present disclosure, there is provided a controller configured to operate a switched mode converter, the switched mode converter comprising a power switch operable with a fixed normal switching frequency; the controller comprising a peak current control circuit configured to switch the power switch in dependence on a peak current in a primary side of the switched mode converter; an oscillator configured to derive the fixed normal switching frequency, a peak current run-away detector configured to detect an on-set of a run-away of the peak current, and a frequency adjustor coupled to the oscillator and configured to instruct the oscillator to temporarily reduce the switching frequency in response to detection of on-set of a run-away of the peak current. Such a controller is shown in Figure 4, which shows a switched mode converter as described above, but in this instance the controller 470 has a controllable oscillator 440, which is controllable by means of a control signal 442. In this non-limiting example the converter is a flyback converter. The controller includes a peak current runaway detector 410, and a frequency adjuster 450.
As shown in figure 4, in embodiments the peak current run-away detector 410 comprises an on-time minimum detector configured to detect that the on-time of the power switch does not exceed a threshold on-time, and a high power demand detector configured to detect a power demand exceeding a threshold power. The threshold on-time may typically be the minimum possible on-time allowed by the converter - limited by propagation and switching delays and LEB, as discussed above; alternatively, the threshold may be set to be just above this minimum possible time - to account for process variation and similar variable factors. The high power demand detector may be implemented, as shown in figure 4, by comparing the control input voltage180 with a reference voltage Vref in a comparator 430: if the control input voltage 180 is greater than the reference voltage, then there is a high power demand, and the output of comparator 430 is positive.

A non-limiting example of an on-time minimum detector will now be described: the converter is switching at minimum on-time if the driver switches off within a certain (short) time interval after the end of the leading edge blanking (LEB) time. So, by stretching the LEB pulse by means of a leading-edge blanking stretcher 462 as shown in figure 4, and by detecting if the driver is already low at the down going slope of the stretched LEB pulse, it may be determined whether the converter is switching at its minimum on-time.

In the embodiment shown in figure 4, the latch 450 operates as the frequency adjustor, by sending a control signal 462 to the oscillator in the event that the drive level 222 is low at the trigger moment. The trigger moment is defined by the falling edge of the output of an "AND" logic gate 420 combining the high power demand signal and the stretched LEB signal. That is to say, the latch 450 clocks only on a negative slope of the clock input. Thus, if a high power demand is not detected by the comparator 430, there is no falling edge to the output of the AND gate 420, the latch 450 is not triggered, and no control signal 442 is supplied to the oscillator 440.

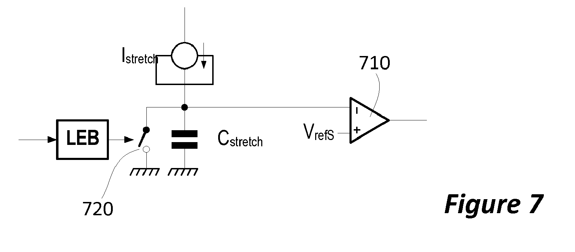

Implementation of the LEB stretcher 462 may depend on the specific leading edge blanking circuit used. However, one non-limiting example is illustrated in Figure 7: the LEB stretcher may be provided by a comparator which compares the voltage on a capacitor Cstretch to a reference voltage VrefS. The capacitor is immediately discharged by a switch 720 that is operated by the LEB signal. When the capacitor is discharged below the reference voltage, the comparator output becomes high. After the LEB pulse, the discharge switch opens and the capacitor is charged by a current source "Istretch". When the voltage on the capacitor exceeds the reference voltage VrefS, the comparator output becomes low. The original LEB pulse is thereby stretched for a duration:

$$\Delta T = Cstretch * Vref / Icharge$$

The on-time minimum detector may be implemented in other ways: as an example of another, non-limiting, embodiment it may be implemented by detecting a negative driver slope during the stretched LEB pulse.

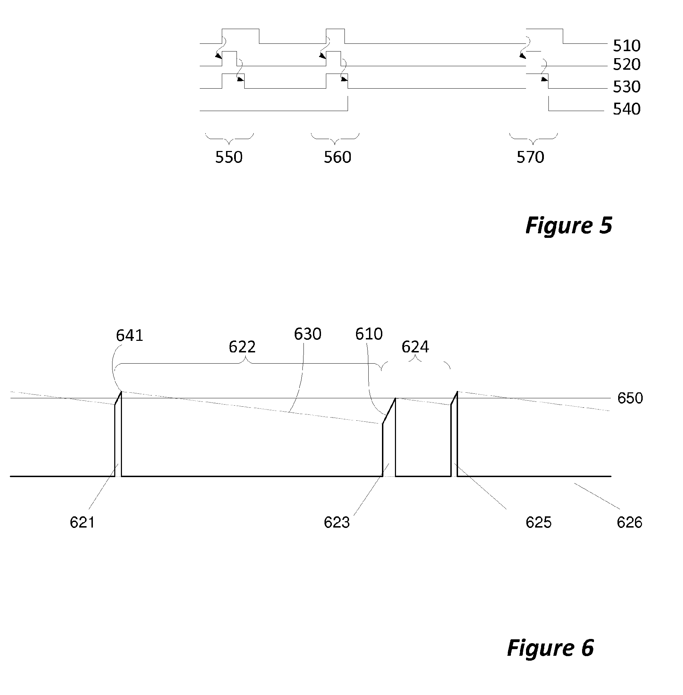

Figure 5 shows signal waveforms corresponding to the controller configuration shown in figure 4. From the top, the figure shows the signal 510 for the driver for the power switch, signal 520 for the leading edge blanking output; the signal 530 for the stretched leading edge blanking signal; and the run-away detected signal 540. For the first pulse, shown at 550, the power switch driver signal 510 is high for a period which is longer than not only the leading-edge blanking signal 520 but also the stretched leading-edge blanking signal 530. This corresponds to normal operation, and no peak current runaway is detected. However, at the next pulse, shown at 560, it is detected that the switch driver signal 510 falls very shortly after the end of the LEB pulse 520, and before the end of the stretched LEB pulse 530. The circuit detects that peak current runaway has commenced and so the peak current runaway detected signal 540 goes high. At the next pulse, shown at 570, the driver signal 510 is still high after the end of the stretched LEB signal 530, from which the detector circuit detects that there is no longer a peak current runaway situation, and the runaway detected signal 540 returns low.

Adjustment of the frequency may be implemented in various ways. For example in some embodiments it may be implemented using a circuit which limits the maximum switching frequency to a value at which no peak current run-away can occur: after detecting the first run-away event, the frequency may be reduced to a level at which no run-away can occur, for instance to 25% of the normal operating frequency. The skilled person would appreciate that this may be put into effect in many different ways. For example oscillator 440 may comprise a voltage controlled oscillator and the oscillator control signal may be the voltage control signal. By suitably arranging that signal, it may be arranged that, in response to detection of on-set of a run-away of the peak current, the signal may control the oscillator to run at 25% of its normal frequency. In such a case, the drive frequency for the power switch will be reduced to 25% of its normal operating frequency. In other embodiments, the oscillator may include a switched frequency divider and in response to detection of onset of a runaway of the peak current, the frequency divider may be switched into the circuit, such that the oscillator continues to oscillate at its normal frequency, but the output signal from the oscillator supplied to the driver is frequency divided, in this instance by a factor of four.

If no run-away is detected during the next cycle, the frequency is set back to its nominal value. The result is that during start-up and shorted output the frequency keeps hopping between two frequencies.

In other embodiments (not shown) the frequency adjuster may reduce the switching frequency by leaving the oscillator oscillation frequency undisturbed but simply skipping (or blanking) the next driver pulse each time run-away is detected. This effectively reduces the switching frequency by 50%.

Other embodiments may operate in a similar manner but may include an up/down counter: if the peak current runaway detection circuit determines that the converter still switches at the minimum on-time for the cycle immediately subsequent to skipping one cycle, the counter may be incremented such that the next two cycles are skipped. Of course this can be extended to skipping even more cycles, by incrementing the counter whenever it is discovered that the converter is still switching at the minimum on-time immediately after some cycles are skipped. Conversely, in the event that, for the cycle immediately following skipped cycles, the converter switches with an on-time which is greater than the minimum on-time - that is to say, peak current runaway is not occurring - the counter may be arranged to decrement by one, or in other embodiments the counter may immediately be reset to zero.

Figure 6 shows the primary current 610 (solid thick line) and secondary current 630 (thin line) for methods according to an aspect of the present disclosure. The figure shows a switching cycling 621 for which the on-time is a minimum, and the peak current 641 at the end of the on-time is greater than the overcurrent protection level 650. The controller detects the onset of a possible peak current run-away, and as a result the controller temporarily reduces the switching frequency, in this case to 25% of its normal value. There is thus a longer gap 622 before the next switching cycle. As described above, this longer gap may be achieved in various ways, such as running the oscillator slower, or skipping cycles (in this case 3 cycles are skipped). Despite the low output voltage and consequent slow fall in current, the secondary current falls significantly during this extended gap. The next subsequent cycle 623 has an on-time which is longer than the minimum on-time, so the controller deems it to be regular or normal operation. Thus the controller sets the normal fixed switching frequency. Due to the low output voltage the secondary current does not fall significantly during the secondary stroke, or off-period, of this normal-frequency switching cycle 624. As a result, the controller detects that the on-time 625 of the next cycle is the minimum on-time, and once again implements the temporary reduction in switching frequency for the next cycle 626.

In contrast to conventional overcurrent protection circuits, one or more embodiments according to the present disclosure may be effective at preventing or reducing saturation of the transformer core at both start-up-when the output capacitor Cout may not be charged and thus the output voltage is low - and on the occurrence of a shorted output.

Switched mode converters, and in particular flyback converters, operating with peak current control at fixed frequency are commonly found in applications with output powers ranging from less than 5 W to greater than 250 W. Due to the relative simplicity of design, flyback converters are most frequently used in low-power applications - that is to say for applications with output powers from less than 5 W to around 75 W. Without limitation, methods and controllers as described herein may be used to effect in such flyback converters.

The embodiments described above have generally referred to flyback converters. However, the present disclosure is not limited thereto. The skilled person will appreciate that according to some embodiments of the present disclosure, there is provided a controller configured to operate a flyback converter and comprising a peak current control circuit; an oscillator; a peak current run-away detector; and a frequency adjustor, each as described in one or more embodiments mentioned above. Without limitation, in other embodiments the controller is configured to operate one of a buck converter, a boost converter, and a boost-buck converter.

From reading the present disclosure, other variations and modifications will be apparent to the skilled person. Such variations and modifications may involve equivalent and other features which are already known in the art of controllers for switch mode power converters, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality and reference signs in the claims shall not be construed as limiting the scope of the claims.

## Claims

1.  A controller, configured to operate a switched mode converter, the switched mode converter comprising a power switch operable with a fixed normal switching frequency;
    the controller comprising

a peak current control circuit configured to switch the power switch in dependence on a peak current in a primary side of the switched mode converter;

an oscillator configured to derive the fixed normal switching frequency, a peak current run-away detector configured to detect an on-set of a run-away of the peak current,

and a frequency adjustor coupled to the oscillator and configured to instruct the oscillator to temporarily reduce the switching frequency in response to detection of on-set of a run-away of the peak current.

2. A controller according to claim 1, wherein the peak current run-away detector comprises:

an on-time minimum detector, configured to detect that the on-time of the power switch does not exceed a threshold on-time;

and a high power demand detector, configured to detect a power demand which exceeds a threshold power.

3. A controller according to claim 2, wherein the controller comprises a leading edge blanking circuit for providing a leading edge blanking period and configured to prevent the power-switch from opening, in operation, before a minimum on-time has elapsed, and a leading edge blanking stretcher circuit, wherein

the on-time minimum detector is configured to detect an on/off status of the power switch at the end of a stretched leading edge blanking period.

4. A controller according to claim 2, wherein the controller comprises a leading edge blanking circuit for providing a leading edge blanking period and configured to prevent the power-switch from opening, in operation, before a minimum on-time has elapsed, and

a leading edge blanking stretcher circuit, wherein the on-time minimum detector is configured to detect an opening of the power switch during a stretched leading edge blanking period.

5. A controller according to any preceding claim, wherein the frequency adjustor is configured to reduce the switching frequency by a predetermined amount for a single switching cycle.

6. A controller according to any of claims 1 to 4, further comprising a counter, wherein the frequency adjustor is configured to reduce the frequency by skipping a number of switching cycles determined by a status of the counter.

7. A controller according to claim 6, wherein the counter is configured to increment by one in response to the peak current run-away detector detecting an on-set of a run-away of the peak current, on a next subsequent switching cycle following the skipped switching cycles.

8. A controller according to claim 6 or 7, wherein the counter is configured to decrement by one in response to the peak current run-away detector detecting an absence of an on-set of a run-away of the peak current on the next subsequent switching cycle following the skipped switching cycles.

9. A switched mode converter comprising a controller as claimed in any proceeding claim, a power switch and a transformer.

10. A switched mode converter according to claim 9 wherein the switched mode converter is a flyback converter.

11. A power supply comprising a switched mode converter as claimed in claim 9 or 10.

12. A method of controlling a switched mode converter, the switched mode converter comprising a power switch operable with a fixed normal switching frequency;

the method comprising

switching the power switch in dependence on a peak current in a primary side of the switched mode converter,

operating an oscillator to derive the fixed normal switching frequency, detecting an on-set of a run-away of the peak current,

and instructing the oscillator to temporarily reduce the switching frequency in response to detection of on-set of a run-away of the peak current.

13. The method of claim 12, wherein detecting an on-set of a run-away of the peak current comprises:

detecting that the on-time of the power switch does not exceed a threshold on-time;

and detecting a power demand which exceeds a threshold power.

14. The method of claim 13, wherein the controller comprises a leading edge blanking circuit for providing a leading edge blanking period and for preventing the power-switch from opening, in operation, before a minimum on-time has elapsed;

the method further comprising

determining a stretched leading edge blanking period, and

detecting an on/off status of the power switch at the end of the stretched leading edge blanking period.

15. The method of claim 13, wherein the controller comprises a leading edge blanking circuit for providing a leading edge blanking period and for preventing the power-switch from opening, in operation, before a minimum on-time has elapsed;
the method further comprising
determining a stretched leading edge blanking period, and
detecting an opening of the power switch during the stretched leading edge blanking period.

100

$V_{in}$

120
N : 1

122

124

160

150

$I_{out}$

$C_{out}$

+

$V_{out}$

−

170

110

180

$R_{sense}$

130

**Figure 1**

200

235

230

220

S

Q

R

240

250

180

$V_{OCP}$

260

222

120

122

N : 1

$V_{in}$

212

$L_{leak}$

110

214

124

160

150

$I_{out}$

$C_{out}$

+

$V_{out}$

−

$R_{sense}$

130

**Figure 2**

295

275

$D_{aux}$

$C_{aux}$

270

280

**Figure 3**

**Figure 4**

*Figure 5*

*Figure 6*

*Figure 7*

Europäisches
Patentamt

European
Patent Office

Office européen
des brevets

# EUROPEAN SEARCH REPORT

Application Number

EP 14 17 5764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/008106 A1 (KAWABE KEITA [JP] ET AL) 14 January 2010 (2010-01-14) <br> * figures 16-22 * <br> * paragraph [0007] * <br> * paragraph [0011] - paragraph [0013] * <br> * paragraph [0015] - paragraph [0028] * <br> ----- | 1-15 | INV. <br> H02M1/32 <br> H02M3/335 <br> H02M1/00 |
| X | US 2007/008756 A1 (DJENGUERIAN ALEX B [US] ET AL) 11 January 2007 (2007-01-11) <br> * figure 4 * <br> * paragraph [0027] - paragraph [0029] * <br> * paragraph [0031] * <br> ----- | 1-15 | |
| A | US 2007/008753 A1 (KROES DEREK J [US]) 11 January 2007 (2007-01-11) <br> * paragraph [0019] * <br> ----- | 1-15 | |

TECHNICAL FIELDS
SEARCHED     (IPC)

H02M

The present search report has been drawn up for all claims

| Place of search | Date of completion of the search | Examiner |
|---|---|---|
| The Hague | 9 December 2014 | Riehl, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 17 5764

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2014

| Patent document cited in search report | | Publication date | Patent family member(s) | | | Publication date |
|---|---|---|---|---|---|---|
| US 2010008106 | A1 | 14-01-2010 | JP | 2010022097 | A | 28-01-2010 |
| | | | US | 2010008106 | A1 | 14-01-2010 |
| US 2007008756 | A1 | 11-01-2007 | CN | 1913311 | A | 14-02-2007 |
| | | | CN | 102064701 | A | 18-05-2011 |
| | | | EP | 1742338 | A2 | 10-01-2007 |
| | | | JP | 5016268 | B2 | 05-09-2012 |
| | | | JP | 5320450 | B2 | 23-10-2013 |
| | | | JP | 2007020393 | A | 25-01-2007 |
| | | | JP | 2012039869 | A | 23-02-2012 |
| | | | US | 2007008756 | A1 | 11-01-2007 |
| | | | US | 2009296427 | A1 | 03-12-2009 |
| | | | US | 2011110125 | A1 | 12-05-2011 |
| | | | US | 2012081930 | A1 | 05-04-2012 |
| | | | US | 2013058138 | A1 | 07-03-2013 |
| US 2007008753 | A1 | 11-01-2007 | CN | 1913312 | A | 14-02-2007 |
| | | | CN | 102075074 | A | 25-05-2011 |
| | | | EP | 1744442 | A2 | 17-01-2007 |
| | | | JP | 4928180 | B2 | 09-05-2012 |
| | | | JP | 2007020394 | A | 25-01-2007 |
| | | | US | 2007008753 | A1 | 11-01-2007 |

EPO FORM P0459

For more details about this annex : see Official Journal of the European Patent Office, No. 12/82